(19) Europäisches Patentamt
European Patent Office
Office européen des brevets

(11) EP 4 063 428 B1

(12) FASCICULE DE BREVET EUROPEEN

(45) Date de publication et mention de la délivrance du brevet:
**20.12.2023 Bulletin 2023/51**

(21) Numéro de dépôt: **22163992.5**

(22) Date de dépôt: **24.03.2022**

(51) Classification Internationale des Brevets (IPC):
***C08G 69/36*** *(2006.01)* ***C08G 69/08*** *(2006.01)*
***C08K 3/11*** *(2018.01)* ***C08L 77/02*** *(2006.01)*

(52) Classification Coopérative des Brevets (CPC):
(C-Sets disponibles)
**C08G 69/36; C08G 69/08; C08K 3/11; C08L 77/02;**
C08K 2201/01 (Cont.)

# (54) COMPOSITION POLYAMIDE POUR MATERIAU COMPOSITE MAGNÉTIQUE

POLYAMIDZUSAMMENSETZUNG FÜR MAGNETISCHES VERBUNDMATERIAL

POLYAMIDE COMPOSITION FOR MAGNETIC COMPOSITE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2021 FR 2103065**

(43) Date de publication de la demande:
**28.09.2022 Bulletin 2022/39**

(73) Titulaire: **ARKEMA FRANCE**
**92700 Colombes (FR)**

(72) Inventeurs:
- **PINEAU, Quentin**
  **27470 SERQUIGNY (FR)**
- **CASSIANO GASPAR, Stefania**
  **27470 SERQUIGNY (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**JP-A- 2006 344 768**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 063 428 B1

(52) Classification Coopérative des Brevets (CPC):
(Cont.)

C-Sets
**C08K 3/11, C08L 77/02**

## Description

[Domaine technique]

La présente invention concerne des compositions pour matériaux composites magnétiques et les matériaux composites en tant que tels.

[Technique antérieure]

Les matériaux composites magnétiques sont de plus en plus utilisés notamment dans les véhicules automobiles en tant que capteurs, alternateurs de voitures, dynamos ou magnétos, dans l'électrique et l'électronique, en tant que haut-parleur ou microphone, ainsi que dans la téléphonie en tant que chargeur de téléphone.

Des compositions pour matériaux magnétiques sont déjà connues et font intervenir des mélanges de polyamide et de charges magnétiques sous forme de poudre, les charges magnétiques étant très fortement majoritaires.

La préparation d'une composition contenant une résine polyamide avec une grande quantité de poudre magnétique, nécessite donc le mélange d'une grande quantité de poudre magnétique avec une composition contenant la résine de polyamide fondue. Néanmoins une très forte viscosification est observée, ce qui peut rendre impossible la processabilité et par ailleurs le mélange polyamide poudre magnétique présente le désavantage d'être instable.

Cette évolutivité a été liée aux fins de chaine acide et / ou amine des polyamides et c'est pourquoi la stratégie a été de diminuer cette teneur par l'utilisation de limiteur de chaine monofonctionnel tel que l'acide stéarique.

Cette stratégie a deux inconvénients : les polyamides doivent avoir des masses moléculaires limitées pour rester fluide et les matériaux avec charges magnétiques sont cassants.

La demande internationale WO2014050631 a tenté de résoudre ce problème avec l'utilisation de 2 types de limiteur de chaine ce qui rend le mélange encore plus stable pour conduire à une composition comprenant une résine polyamide, dans laquelle la concentration de groupes amino terminaux et la concentration de groupes carboxyle terminaux de la résine polyamide sont comprises de 10 $\mu$eq/g à 40 $\mu$eq/g.

Cette seconde stratégie permet d'augmenter un peu les masses moléculaires mais il est nécessaire d'améliorer la ductilité du mélange final.

JP2006344768 divulgue un matériau composite magnétique comprenant : 7% en poids d'un copolymère de polyamide, 92.97% en poids de poudre magnétique de Nd-Fe-B et 0.03% en poids d'un lubrifiant.

Il est donc nécessaire de trouver de nouvelles compositions pour matériaux magnétiques permettant de pallier ces différents problèmes et c'est donc l'objet de la présente invention qui concerne un matériau composite magnétique caractérisé en ce qu'il comprend :

4 à 30% en poids d'un copolymère,
70 à 96% en poids de poudre magnétique,
0 à 5% en poids d'au moins un agent de couplage,
0 à 5% en poids d'au moins un additif,
la somme du copolymère, de la poudre magnétique, de l'agent de couplage et de l'additif étant égale à 100% en poids, ledit copolymère étant constitué de :

- au moins un motif (A) choisi parmi un motif polyamide,
- au moins une unité acide monocarboxylique (B),
- au moins une unité diamine (C),
- au moins une unité triamine (D),
- optionnellement au moins un motif (E) polyétheramide,

la somme des constituants A, B, C, D et E étant égale à 100% en poids par rapport au poids total du copolymère.

Les inventeurs ont donc trouvé de manière inattendue que le mélange d'un copolymère particulier, comprenant notamment au moins une unité acide monocarboxylique (B), au moins une unité diamine (C) et au moins une unité triamine (D), avec une poudre magnétique permettait l'obtention d'un matériau magnétique qui présente l'avantage d'être non seulement stable lors du mélange, mais aussi de ne pas présenter une forte viscosification lors du mélange, ce qui permet une bonne processabilité. Par ailleurs, les masses moléculaires des polyamides ne sont pas limitées et les matériaux avec charges magnétiques obtenus sont ductiles.

**S'agissant du copolymère**

Le copolymère est constitué d'au moins un motif (A), d'au moins une unité acide monocarboxylique (B), d'au moins une unité diamine (C), d'au moins une unité triamine (D), et optionnellement d'au moins un motif polyétheramide (E).
Avantageusement, le copolymère présente un taux de fins de chaîne acide inférieur à 10 μeq/g. Avantageusement, le copolymère présente un taux de fins de chaîne amine inférieur à 80 μeq/g.
Plus avantageusement, le copolymère présente un taux de fins de chaîne acide inférieur à 10 μeq/g et un taux de fins de chaîne amine inférieur à 80 μeq/g.
Les fins de chaîne acides et amine peuvent être dosées par potentiométrie ou par RMN.
Dosage des fins de chaîne acide par dosage de l'acidité totale:
L'acidité est mesurée selon la méthode suivante. 1g de polyamide est dissout dans 80 mL d'alcool benzylique à chaud. L'échantillon est ensuite refroidi. Puis, il est dosé par potentiométrie à l'aide d'un titrateur Metrohm (888 ou 716) avec une électrode combinée pH, par une solution d'hydroxyde de tétrabutylammonium à 0.02N. La courbe potentiel en fonction du volume donne un saut avec un volume équivalent à partir duquel, on calcule les fins de chaines acides grâce à la formule suivante :

[Math 1]

$$\text{Fin de chaînes acide (meq/g)} = \frac{\text{Veq} \times [\text{TBAOH}]}{\text{m}}$$

dans laquelle

Veq désigne le volume équivalent obtenu grâce au dosage potentiométrique,
[TBAOH] désigne la concentration de la solution d'hydroxyde de tétrabutylammonium, c'est-à-dire 0,02 N,
m désigne la masse de l'échantillon, c'est-à-dire 1g.

Cette méthode dose aussi bien les fins de chaîne acide que l'H3PO4 introduit dans la composition. Connaissant la quantité d'H3PO4 introduite dans la composition, on en déduit la proportion de fins de chaîne acide.
Dosage des fins de chaîne amine
Les fins de chaîne amine sont dosées par potentiométrie.

**Le motif A**

Le motif A est un polyamide semi-cristallin ou amorphe.
Un polyamide semi-cristallin, au sens de l'invention, désigne un polyamide qui présente une température de transition vitreuse en DSC selon la norme ISO 11357-2 :2013 ainsi qu'une température de fusion (Tf) en DSC selon la norme ISO 11357-3 :2013.
Un polyamide amorphe, au sens de l'invention, désigne un polyamide transparent amorphe présentant seulement une température de transition vitreuse (pas de température de fusion (Tf)), ou un polyamide très peu cristallin ayant une température de transition vitreuse et un point de fusion tel que l'enthalpie de cristallisation lors de l'étape de refroidissement à une vitesse de 20K/min en analyse calorimétrique différentielle (« Differential Scanning Calorimetry » DSC en anglais) mesurée selon la norme ISO 11357-3 :2013 est inférieure à 30 J/g, notamment inférieure à 20 J/g, de préférence inférieure à 15 J/g. Avantageusement, la température de transition vitreuse (Tg) mesurée par DSC à une vitesse de chauffe de 20K/min selon la norme ISO 11357-1 :2009 et ISO 11357-2 :2013 pour ces polyamides est supérieure à 75°C.
La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.
L'expression « polyamide » signifie un homopolyamide ou un copolyamide. Il est bien entendu qu'il peut s'agir d'un mélange de polyamides aliphatiques.
Le nombre moyen d'atomes de carbone par rapport à l'atome d'azote est supérieur à ou égal à 6. Avantageusement, il est supérieur ou égal à 8.
Dans le cas d'un homopolyamide de type PAXY, le nombre d'atomes de carbone par atome d'azote est la moyenne du motif X et du motif Y.
Dans le cas d'un copolyamide, le nombre de carbones par azote se calcule selon le même principe. Le calcul est réalisé au prorata molaire des différents motifs amides.

Le motif polyamide est issu de la polycondensation d'au moins un lactame, ou d'au moins un acide aminocarboxylique, ou d'au moins une diamine avec au moins un acide dicarboxylique.

Dans un premier mode de réalisation :

Dans une première variante de ce premier mode de réalisation, le polyamide semi-cristallin est obtenu à partir de la polycondensation d'au moins un acide aminocarboxylique comprenant de 6 à 18 atomes de carbone, préférentiellement de 8 à 12 atomes de carbone, plus préférentiellement de 10 à 12 atomes de carbone. Il peut ainsi être choisi parmi l'acide 6-aminohexanoïque, l'acide 7-aminoheptanoïque, l'acide 8-aminooctanoïque, l'acide 9-aminononanoïque, l'acide 10-aminodécanoïque, l'acide 11-aminoundécanoïque et l'acide 12-aminododécanoïque, l'acide 13-aminotridécanoïque, l'acide 14-aminotetradécanoïque, l'acide 15-aminopentadécanoïque, l'acide 16-aminohexadécanoïque, l'acide 17-aminoheptadécanoïque, l'acide 18-aminooctadécanoïque.

Préférentiellement, il est obtenu à partir de la polycondensation d'un seul acide aminocarboxylique.

Dans une deuxième variante de ce premier mode de réalisation, le polyamide semi-cristallin est obtenu à partir de la polycondensation d'au moins un lactame comprenant de 6 à 18 atomes de carbone, préférentiellement de 8 à 12 atomes de carbone, plus préférentiellement de 10 à 12 atomes de carbone.

Préférentiellement, il est obtenu à partir de la polycondensation d'un seul lactame.

Dans une troisième variante de ce premier mode de réalisation, le polyamide semi-cristallin est obtenu à partir de la polycondensation d'au moins une diamine comprenant de 4 à 36 atomes de carbones, avantageusement de 6 à 18 atomes de carbone, avantageusement de 6 à 12 atomes de carbone, avantageusement de 10 à 12 atomes de carbone et d'au moins un acide dicarboxylique comprenant de 4 à 36 atomes de carbones, avantageusement de 6 à 18 atomes de carbone, avantageusement de 6 à 12 atomes de carbone, avantageusement de 8 à 12 atomes de carbone .

La diamine utilisée pour l'obtention de ce motif répétitif XY peut être une diamine aliphatique ou alkylaromatique.

La diamine aliphatique présente une chaine principale linéaire comprenant au moins 4 atomes de carbone.

Cette chaine principale linéaire peut, le cas échéant, comporter un ou plusieurs substituants méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire".

Qu'elle comporte ou non des substituants méthyle et/ou éthyle sur la chaine principale, la diamine aliphatique utilisée pour l'obtention de ce motif répétitif XY comprend de 4 à 36 atomes de carbones, avantageusement de 4 à 18 atomes de carbone, avantageusement de 6 à 18 atomes de carbone, avantageusement de 6 à 14 atomes de carbone.

Lorsque cette diamine est une diamine aliphatique linéaire, elle répond alors à la formule H2N-(CH2)x-NH2 et peut être choisie par exemple parmi la butanediamine, la pentanediamine, l'hexanediamine, l'heptanediamine, l'octanediamine, la nonanediamine, la décanediamine, l'undécanediamine, la dodécanediamine, la tridécanediamine, la tétradécanediamine, l'hexadécanediamine, l'octadécanedia-mine et l'octadécènediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine, la 2-méthyl-1,8-octanediamine ou la triméthylène (2,2,4 ou 2,4,4) hexanediamine.

La diamine alkylaromatique peut être choisie parmi la 1,3-xylylène diamine et la 1,4-xylylène diamine Le diacide carboxylique peut être choisi parmi les diacides carboxyliques aliphatiques, linéaires ou ramifiés.

L'acide dicarboxylique peut être aliphatique, cycloaliphatique ou aromatique.

Lorsque l'acide dicarboxylique est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18), l'acide eicosanedioïque (20), l'acide docosanedioïque (22).

Lorsque le diacide carboxylique est cycloaliphatique, il peut comporter les squelettes carbonés suivants : norbornyl méthane, cyclohexane, cyclohexylméthane, dicyclohexylméthane, dicyclohexylpropane, di(méthylcyclohexyl) ou di(méthylcyclo-hexyl)propane.

Lorsque le diacide carboxylique est aromatique, il peut être choisi parmi l'acide téréphtalique (noté T), l'acide isophtalique (noté I) et un acide naphtalénique (noté N).

Dans une quatrième variante de ce premier mode de réalisation, le polyamide aliphatique semi-cristallin est obtenu à partir d'un mélange de ces trois variantes.

Avantageusement, le motif polyamide est issu de la polycondensation d'au moins un lactame, ou d'au moins un acide aminocarboxylique, ou d'au moins une diamine aliphatique avec au moins un acide dicarboxylique aliphatique.

Avantageusement, ledit polyamide est un polyamide aliphatique semi-cristallin Avantageusement, ledit polyamide aliphatique semi-cristallin est choisi parmi les PA410, PA510, PA512, PA514, PA610, PA612, PA1010, PA1012, PA1212, PA1014, PA11 et le PA12, en particulier les PA1010, PA1012, PA1212, PA11, PA12.

Avantageusement, le polyamide aliphatique semi-cristallin est choisi parmi le PA6, le PA66, le PA11 et le PA12 ou un mélange de ceux-ci ou un copolyamide de ceux-ci.

Avantageusement, ledit polyamide aliphatique semi-cristallin est choisi parmi le PA11 et le PA12, en particulier

le PA11.

Avantageusement, un seul polyamide semi-cristallin est présent dans la composition.

Polyamide amorphe

Le polyamide amorphe est un polyamide de formule X1Y1 ou W/XY dans laquelle :

- W est un motif répétitif aliphatique choisi parmi un motif obtenu à partir de la polycondensation d'au moins un aminoacide, un motif obtenu à partir de la polycondensation d'au moins un lactame et un motif obtenu à partir de la polycondensation d'au moins une diamine aliphatique et d'au moins un diacide aliphatique,
- X1 est au moins une diamine cycloaliphatique, et
- Y1 est au moins un diacide carboxylique, ledit diacide étant choisi parmi un diacide aliphatique, linéaires ou ramifiés, un diacide cycloaliphatique et un diacide aromatique,

ladite diamine X1 et ledit diacide Y1 comprenant de 4 à 36 atomes de carbone, avantageusement de 4 à 18 atomes de carbone, avantageusement de 6 à 18 atomes de carbone, avantageusement de 6 à 14 atomes de carbone.

Avantageusement, le polyamide amorphe est un polyamide de formule W/XY. L'aminoacide, le lactame, la diamine et le diacide carboxylique constitutifs du motif W sont tels que défini pour le polyamide aliphatique semi-cristallin ci-dessus défini.

Le polyamide amorphe peut être un homopolyamide ou un copolyamide.

Les proportions molaires en diamine X1 et en diacide carboxylique Y1 sont préférentiellement stoechiométriques.

La diamine cycloaliphatique X1 peut être choisie par exemple parmi le bis(3,5-dialkyl-4-aminocyclohexyl)-méthane, le bis(3,5-dialkyl-4-aminocyclohexyl)éthane, le bis(3,5-dialkyl-4-aminocyclohexyl)-propane, le bis(3,5-dialkyl-4-aminocyclo-hexyl)-butane, le bis-(3-méthyl-4-aminocyclohexyl)-méthane ou 3'-diméthyl-4,4'-diamino-dicyclohexyl-méthane couramment dénommé "BMACM" ou "MACM" (et noté B ci-après), le p-bis(aminocyclohexyl)-méthane couramment dénommé "PACM" (et noté P ci-après), l'isopropylidènedi(cyclohexylamine) couramment dénommé "PACP", l'isophorone-diamine (notée IPD ci-après) et le 2,6-bis(amino méthyl)norbornane couramment dénommé "BAMN".

Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

Le diacide carboxylique Y1 peut être choisi parmi les diacides carboxyliques aliphatiques, linéaires ou ramifiés, les diacides carboxyliques cycloaliphatiques et les diacides carboxyliques aromatiques. Lorsque l'acide dicarboxylique Y1 est aliphatique et linéaire, il est tel que défini ci-dessus pour le diacide Y.

Lorsque le diacide carboxylique Y1 est cycloaliphatique, il peut comporter les squelettes carbonés suivants : norbornyl méthane, cyclohexane, cyclohexylméthane, dicyclohexylméthane, dicyclohexylpropane, di(méthylcyclohexyl) ou di(méthylcyclo-hexyl)propane.

Lorsque le diacide carboxylique Y1 est aromatique, il peut être choisi parmi l'acide téréphtalique (noté T), l'acide isophtalique (noté I) et un acide naphtalénique.

Avantageusement, le diacide carboxylique Y1 est aromatique, et il peut être choisi parmi l'acide téréphtalique (noté T), l'acide isophtalique (noté I).

Avantageusement, le polyamide amorphe est partiellement ou totalement bio ressourcé. Avantageusement, le polyamide amorphe est choisi parmi 11/B10, 12/B10, 11/P10, 12/P10, 11/BI/BT, 12/BI/BT, 11/PI/BT, 12/PI/BT, 11/PI/PT, 12/PI/PT, 11/BI, 12/BI, 11/PI et 12/PI, notamment 11/B10.

**L'unité acide monocarboxylique B**

L'acide monocarboxylique peut être un acide monocarboxylique aliphatique, un acide alicyclique, un acide gras monoinsaturé ou un acide monocarboxylique aromatique.

L'acide monocarboxylique aliphatique est un acide comprenant de 2 à 18 atomes de carbone.

Des exemples d'acide monocarboxylique aliphatiques sont l'acide acétique, l'acide propionique, l'acide butyrique, l'acide isobutyrique, l'acide valérique, l'acide caproïque, l'acide caprique, l'acide laurique, l'acide tridécylique, l'acide myristique, l'acide palmitique, l'acide stéarique et l'acide pivalique.

L'acide monocarboxylique alicyclique est par exemple l'acide cyclohexanecarboxylique;

L'acide monocarboxylique aromatique est par exemple l'acide benzoïque, l'acide toluique, l'acide $\alpha$-/ $\beta$-naphtalènecarboxylique, l'acide méthylnaphtalène-carboxylique et l'acide phénylacétique et leurs dérivés.

L'acide gras monoinsaturé est par exemple l'acide palmitoléique, l'acide oléique et l'acide undécylénique.

Dans un mode de réalisation, l'acide monocarboxylique est un acide monocarboxylique aliphatique, en particulier choisi parmi l'acide isobutyrique, l'acide tridécylique, l'acide myristique, l'acide palmitique, l'acide stéarique et l'acide pivalique.

Dans un autre mode de réalisation, l'acide monocarboxylique est un acide gras monoinsaturé, en particulier

l'acide undécylénique.

**L'unité diamine C**

La diamine C peut être une diamine aliphatique tel que définie pour X ci-dessus, en particulier la nonamethylenediamine, la decamethylenediamine et la dodecamethylenediamine, une diamine cycloaliphatique peut être la cyclohexanediamine, la methylcyclohexanediamine ou une diamine cycloaliphatique telle que définie pour X1 ci-dessus, ou une diamine aromatique telle que définie pour X ci-dessus.
Dans un mode de réalisation, ladite diamine est une diamine aliphatique, en particulier l'héxaméthylène diamine.

**L'unité triamine D**

La triamine D peut être une triamine aliphatique telle que la diéthylène triamine (DETA), la Bis(Hexamethylene)triamine ou une polyéthertriamine.
La polyéthertriamine est par exemple de formule (I) suivante :

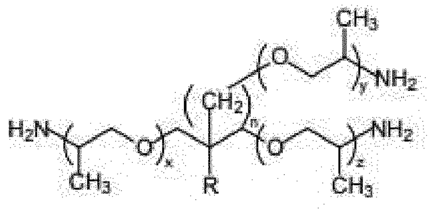
(I)

Dans laquelle R = H ou $C_2H_5$
x + y + z est compris de 4 à 100 et n = 0 ou 1.

Ces produits sont notamment commercialisés sous le nom de Jeffamine®.
Avantageusement, la triamine est choisi parmi la diéthylène triamine (DETA), la Bis(Hexamethylene)triamine ou une polyéthertriamine.
Avantageusement, la triamine aliphatique est la diéthylène triamine (DETA).

**Le motif polyétheramide optionnel (E)**

Le motif polyétheramide est issu de la polycondensation d'au moins une polyétherdiamine avec au moins un acide dicarboxylique aliphatique.
Dans un premier mode de réalisation, le copolymère est constitué de :

- au moins un motif (A) choisi parmi un motif polyamide semi-cristallin,
- au moins une unité acide monocarboxylique (B),
- au moins une unité diamine (C),
- au moins une unité triamine (D),

la somme des constituants A, B, C et D étant égale à 100% en poids par rapport au poids total du copolymère.
Dans ce premier mode de réalisation :

Dans une première variante, le copolymère est constitué de :

- au moins un motif (A) choisi parmi un motif polyamide aliphatique semi-cristallin,
- au moins une unité acide monocarboxylique (B),
- au moins une unité diamine (C),
- au moins une unité triamine (D),

la somme des constituants A, B, C et D étant égale à 100% en poids par rapport au poids total du copolymère.

Dans une seconde variante, le copolymère est constitué de :

- au moins un motif (A) choisi parmi un motif polyamide semi-cristallin,
- au moins une unité acide monocarboxylique (B) qui est de l'acide undécylénique,
- au moins une unité diamine (C),
- au moins une unité triamine (D),

la somme des constituants A, B, C et D étant égale à 100% en poids par rapport au poids total du copolymère.

Dans une troisième variante, le copolymère est constitué de :

- au moins un motif (A) choisi parmi un motif polyamide semi-cristallin,
- au moins une unité acide monocarboxylique (B),
- au moins une unité diamine (C) qui est l'héxaméthylène diamine,
- au moins une unité triamine (D),

la somme des constituants A, B, C et D étant égale à 100% en poids par rapport au poids total du copolymère.

Dans une quatrième variante, le copolymère est constitué de :

- au moins un motif (A) choisi parmi un motif polyamide semi-cristallin,
- au moins une unité acide monocarboxylique (B),
- au moins une unité diamine (C),
- au moins une unité triamine (D) qui est la diéthylène triamine,

la somme des constituants A, B, C et D étant égale à 100% en poids par rapport au poids total du copolymère.

Dans une cinquième variante, le copolymère est constitué de :

- au moins un motif (A) choisi parmi un motif polyamide aliphatique semi-cristallin,
- au moins une unité acide monocarboxylique (B) qui est de l'acide undécylénique,
- au moins une unité diamine (C),
- au moins une unité triamine (D),

la somme des constituants A, B, C et D étant égale à 100% en poids par rapport au poids total du copolymère.

Dans une sixième variante, le copolymère est constitué de :

- au moins un motif (A) choisi parmi un motif polyamide aliphatique semi-cristallin,
- au moins une unité acide monocarboxylique (B),
- au moins une unité diamine (C) qui est l'héxaméthylène diamine,
- au moins une unité triamine (D),

la somme des constituants A, B, C et D étant égale à 100% en poids par rapport au poids total du copolymère.

Dans une septième variante, le copolymère est constitué de :

- au moins un motif (A) choisi parmi un motif polyamide aliphatique semi-cristallin,
- au moins une unité acide monocarboxylique (B),
- au moins une unité diamine (C),
- au moins une unité triamine (D) qui est la diéthylène triamine,

la somme des constituants A, B, C et D étant égale à 100% en poids par rapport au poids total du copolymère.

Dans une huitième variante, le copolymère est constitué de :

- au moins un motif (A) choisi parmi un motif polyamide aliphatique semi-cristallin,
- au moins une unité acide monocarboxylique (B) qui est de l'acide undécylénique,
- au moins une unité diamine (C) qui est l'héxaméthylène diamine,
- au moins une unité triamine (D),

la somme des constituants A, B, C et D étant égale à 100% en poids par rapport au poids total du copolymère.

Dans une neuvième variante, le copolymère est constitué de :

- au moins un motif (A) choisi parmi un motif polyamide aliphatique semi-cristallin,
- au moins une unité acide monocarboxylique (B) qui est de l'acide undécylénique,

- au moins une unité diamine (C),
- au moins une unité triamine (D) qui est la diéthylène triamine,

la somme des constituants A, B, C et D étant égale à 100% en poids par rapport au poids total du copolymère.

Dans une dixième variante, le copolymère est constitué de :

- au moins un motif (A) choisi parmi un motif polyamide aliphatique semi-cristallin,
- au moins une unité acide monocarboxylique (B) qui est de l'acide undécylénique,
- au moins une unité diamine (C) qui est l'héxaméthylène diamine,
- au moins une unité triamine (D) qui est la diéthylène triamine,

la somme des constituants A, B, C et D étant égale à 100% en poids par rapport au poids total du copolymère.

Avantageusement, dans ces dix variantes, la proportion molaire de motif A est égale à deux fois la proportion molaire de la somme de l'unité B et de l'unité C.

Avantageusement dans ces dix variantes, le polyamide semi-cristallin est le PA11.

Avantageusement, dans ces dix variantes, la proportion molaire de motif A est égale à deux fois la proportion molaire de la somme de l'unité B et de l'unité C et le polyamide semi-cristallin est le PA11. Dans un second mode de réalisation, le copolymère est constitué de :

- au moins un motif (A) choisi parmi un motif polyamide semi-cristallin,
- au moins une unité acide monocarboxylique (B),
- au moins une unité diamine (C),
- au moins une unité triamine (D),
- au moins un motif (E) polyétheramide,

la somme des constituants A, B, C, D et E étant égale à 100% en poids par rapport au poids total du copolymère.

Dans ce second mode de réalisation, les dix variantes définies ci-dessus sont également possibles. Dans ces premier et second modes de réalisation, il existe aussi les dix mêmes variantes pour chaque, excepté que le polyamide est un polyamide semi-aromatique semi-cristallin.

Avantageusement, dans ces dernières variantes, la proportion molaire de motif A est égale à deux fois la proportion molaire de la somme de l'unité B et de l'unité C.

Avantageusement, le polyamide semi-aromatique semi-cristallin est choisi parmi le PA6I/6T, le PA11/10T, le PA BACT/6T et le PA11/BACT/6T, le PA BACT/10T, le PA11/BACT/10T et le PA MXD10. Dans un troisième mode de réalisation, le copolymère est constitué de :

- au moins un motif (A) choisi parmi un motif polyamide amorphe,
- au moins une unité acide monocarboxylique (B),
- au moins une unité diamine (C),
- au moins une unité triamine (D),

la somme des constituants A, B, C et D étant égale à 100% en poids par rapport au poids total du copolymère.

Dans un quatrième mode de réalisation, le copolymère est constitué de :

- au moins un motif (A) choisi parmi un motif polyamide amorphe,
- au moins une unité acide monocarboxylique (B),
- au moins une unité diamine (C),
- au moins une unité triamine (D),
- au moins un motif (E) polyétheramide,

la somme des constituants A, B, C, D et E étant égale à 100% en poids par rapport au poids total du copolymère.

Dans ces troisième et quatrième mode de réalisation, les dix variantes définies pour les premier et deuxième modes de réalisation existent aussi excepté que le polyamide est un polyamide amorphe. Avantageusement, dans les variantes de ces troisième et quatrième modes de réalisation, la proportion molaire de motif A est égale à deux fois la proportion molaire de la somme de l'unité B et de l'unité C.

Avantageusement, le polyamide amorphe est choisi parmi le B10, P10, B12, P12, B14, P14, le 11/B10 et les copolyamides tels que 6/66/12.

Avantageusement, le polyamide amorphe est choisi parmi le B10, P10, B12, P12, B14, P14 et le 11/ B 10.

P désigne la bis(4-aminocyclohexyl)-méthane, également dénommée PACM ou P dans la description.

B désigne la bis(4-amino-3-methylcyclohexyl)methane, également dénommée MACM ou BMACM ou B dans la description.

10 désigne l'acide décanedioïque, 12 désigne l'acide dodécanedioïque, 14 désigne l'acide tétradécanedioïque.

11 désigne l'acide aminoundécanedioïque.

Avantageusement,

**S'agissant du matériau composite magnétique**

Le matériau composite magnétique comprend :

4 à 30% en poids d'un copolymère tel que défini ci-dessus,
70 à 96% en poids de poudre magnétique,
0 à 5% en poids d'au moins un agent de couplage,
0 à 5% en poids d'au moins un additif,
la somme du copolymère, de la poudre magnétique, de l'agent de couplage et de l'additif étant égale à 100% en poids.

Dans un mode de réalisation, le matériau composite magnétique est constitué de :

4 à 30% en poids d'un copolymère tel que défini ci-dessus,
70 à 96% en poids de poudre magnétique,
0 à 5% en poids d'au moins un agent de couplage,
0 à 5% en poids d'au moins un additif,
la somme du copolymère, de la poudre magnétique, de l'agent de couplage et de l'additif étant égale à 100% en poids.

**La poudre magnétique**

La poudre magnétique du matériau composite magnétique ci-dessus défini est choisie parmi les alliages fer-nickel-aluminium, les ferrites, les alliages Samarium-cobalt, les alliages néodyme-Fer-Bore, les manganèse-aluminium-carbone et les alliages samarium-fer-azote.

Avantageusement, la poudre magnétique du matériau composite magnétique ci-dessus défini est choisie parmi les alliages fer-nickel-aluminium, les ferrites, les alliages Samarium-cobalt, les alliages néodyme-Fer-Bore et les manganèse-aluminium-carbone.

L'agent de couplage

La poudre de métal magnétique peut être traitée au préalable avec un agent de couplage pour améliorer l'adhérence de la poudre avec la résine polyamide.

Des exemples d'agent de couplage sont des composés de silane, des composés de titanate, des composés d'aluminium, des composés de chrome, des composés de méthacrylate et des composés organiques de phosphore tels que des esters de phosphite.

Dans un mode de réalisation, l'agent de couplage est présent de 0,1 à 5% en poids.

Les additifs

Les additifs peuvent être tout additif bien connu de l'homme du métier et en particulier un catalyseur, notamment H3PO4 et H3PO2, un antioxydant, en particulier de type phénolique ou de type phosphorique ou un stabilisant à la lumière de type amine encombré (HALS), un anti UV et un agent anti mousse.

Dans un mode de réalisation, le talc, le graphite et l'oxyde de magnésium sont exclus du matériau composite magnétique.

Dans un autre mode de réalisation, le Sm-Fe-N est exclu des poudres magnétiques et donc du matériau composite magnétique.

Dans encore un autre mode de réalisation, un polymère dendritique silane-polyamide-amine est exclu du matériau composite magnétique.

Dans un dernier autre mode de réalisation, un lubrifiant est exclu des additifs et pat conséquent du matériau composite magnétique.

Les quatre modes de réalisation ci-dessus définis peuvent aussi se combiner deux à deux ou bien trois modes de réalisation sur les quatre peuvent être combinés ou encore les quatre modes de réalisation ci-dessus définis sont

tous les quatre combinés.

Dans un mode de réalisation, l'agent de couplage est présent de 0,1 à 5% en poids.

Selon un autre aspect, la présente invention concerne un procédé de préparation d'un matériau composite magnétique tel que défini ci-dessus, caractérisé en ce qu'il comprend une étape de mélange d'un copolymère tel que défini ci-dessus sous forme de granulés, avec une poudre magnétique, en particulier telle que définie ci-dessus, et optionnellement au moins un agent de couplage et au moins un additif.

Dans un mode de réalisation, ledit procédé de préparation d'un matériau composite magnétique comprend une étape d'extrusion et de granulation du mélange de poudre magnétique avec ledit copolymère sous forme de granulés et optionnellement l'agent de couplage et/ou l'additif.

## EXEMPLES

### **Exemple 1** : **Préparation des copolymères de l'invention et de copolymères comparatifs**

Exemple selon l'invention !1

Dans un autoclave muni d'un agitateur, on introduit 5000 g d'acide 11-aminoundécanoïque, 11.5 g de diéthylènetriamine (DETA), 66g d'hexaméthylènediamine (HMDA), 209g d'acide undécylénique, 5g d'Irganox® 1098, 6g d'acide orthophosphorique 85%, 0 .2 g de siliconol 1000, et 150g d'eau. Le réacteur est chauffé jusqu'à 250°C matière sous pression autogène et sous agitation. Les conditions sont maintenues pendant 1 heure, puis le réacteur est détendu jusqu'à pression atmosphérique et la température abaissée à 240°C. Une phase de balayage sous azote est opérée pendant 30 min avant de passer sous vide de 50 mbar pendant 90 min, avant de vider le réacteur.

Exemple selon l'invention I2

Dans un autoclave muni d'un agitateur, on introduit 2000g de caprolactame, 11.5 g de diéthylènetriamine (DETA), 508.96g d'hexaméthylènediamine (HMDA), 557.04 g d'acide adipique, 2000g de lauryllactame, 209g d'acide undécylénique, 5g d'Irganox® 1098, 6g d'acide orthophosphorique 85%, 0 .2 g de siliconol 1000, et 200g d'eau. Le réacteur est chauffé jusqu'à 260°C matière sous pression autogène et sous agitation. Les conditions sont maintenues pendant 4 heures, puis le réacteur est détendu jusqu'à pression atmosphérique et la température abaissée à 240°C. Une phase de balayage sous azote est opérée pendant 30 min avant de passer sous vide de 50 mbar pendant 90 min, avant de vider le réacteur.

Contre Exemple C1

Dans un autoclave muni d'un agitateur, on introduit 5000 g d'acide 11-aminoundécanoïque, 70g d'acide laurique, 0 .2 g de siliconol 1000, et 150g d'eau. Le réacteur est chauffé jusqu'à 250°C matière sous pression autogène et sous agitation. Les conditions sont maintenues pendant 1 heure, puis le réacteur est détendu jusqu'à pression atmosphérique et la température abaissée à 240°C. Une phase de balayage sous azote est opérée pendant 30 min avant de passer sous vide de 50 mbar pendant 90 min, avant de vider le réacteur.

Contre Exemple C2

Dans un autoclave muni d'un agitateur, on introduit 1000 g d'acide 11-aminoundécanoïque, 1894 g de décaméthylènediamine, 2160g d'acide sébacique, 90g d'acide stéarique, 0 .2 g de siliconol 1000, et 150g d'eau. Le réacteur est chauffé jusqu'à 250°C matière sous pression autogène et sous agitation. Les conditions sont maintenues pendant 1 heure, puis le réacteur est détendu jusqu'à pression atmosphérique et la température abaissée à 240°C. Une phase de balayage sous azote est opérée pendant 30 min avant de passer sous vide de 50 mbar pendant 90 min, avant de vider le réacteur.

Contre Exemple C3

Dans un autoclave muni d'un agitateur, on introduit 1100g de caprolactame, 398.7 d'hexaméthylènediamine (HMDA), 581.3 g d'acide adipique, 3000g de lauryllactame, 5g d'Irganox® 1098, 0 .2 g de siliconol 1000, et 200g d'eau. Le réacteur est chauffé jusqu'à 260°C matière sous pression autogène et sous agitation. Les conditions sont maintenues pendant 4 heures, puis le réacteur est détendu jusqu'à pression atmosphérique et la température abaissée à 240°C. Une phase de balayage sous azote est opérée pendant 30 min avant de passer sous vide de 50 mbar pendant 90 min, avant de vider le réacteur.

Contre Exemple C4

Dans un autoclave muni d'un agitateur, on introduit 1100g de caprolactame, 710.1 d'hexaméthylènediamine (HMDA), 779.9 g d'acide adipique, 2500g de lauryllactame, 5g d'Irganox® 1098, 0 .2 g de siliconol 1000, et 200g d'eau. Le réacteur est chauffé jusqu'à 260°C matière sous pression autogène et sous agitation. Les conditions sont maintenues pendant 4 heures, puis le réacteur est détendu jusqu'à pression atmosphérique et la température abaissée à 240°C. Une phase de balayage sous azote est opérée pendant 30 min avant de passer sous vide de 50 mbar pendant 90 min, avant de vider le réacteur.

**Exemple 2 : analyse de l'acidité et la basicité des copolymères de l'exemple 1**

La basicité et l'acidité sont déterminées telles que décrites dans le texte et indiquées dans le tableau 1.

[Tableau 1]

| Exemples et contre exemples | COOH (μeq/g) | Amines (μeq/g) |
|---|---|---|
| Copolymère I1<br>Acide 11-aminoundécanoïque + acide undécylénique + HMDA + DETA | <10 | 52 |
| Copolymère I2<br>Caprolactame + acide undécylénique + Acide adipique + lauryllactame + HMDA + DETA | <10 | 60 |
| C1<br>Acide 11-aminoundécanoïque + acide laurique | 83 | 20 |
| Copolymère C2<br>Acide 11-aminoundécanoïque + acide stéarique + acide sébacique + décaméthylènediamine | 48 | 69 |
| Copolymère C3<br>Caprolactame + Acide adipique + lauryllactame + HMDA | 170 | 39 |
| Copolymère C4<br>Caprolactame + Acide adipique + lauryllactame + HMDA | 19 | 347 |

**Exemple 3 : analyse rhéologique des matériaux composites magnétique obtenus par mélange des copolymères comparatifs et de l'invention avec une poudre de ferrite NdFeB (5/95 poids/poids)**

Les polymères des exemples I1, I2 et C1 à C4 sont broyés dans l'azote liquide et mélangés avec les charges magnétiques.

Après séchage 90°C sous vide pendant 12h, les échantillons sont placés dans un rhéomètre (MCR301) pour mesurer la viscosité à l'état fondu. Un balayage temporel de 30 min est réalisé à 1Hz, 210°C sous azote, entre 2 plans parallèles de 25 mm de diamètre.

La viscosité initiale correspond à la mesure après le démarrage du rhéomètre : t0 + 10s pour enregistrement de la mesure.

La viscosité après 30 minutes correspond à la mesure après 30 minutes de balayage dans le rhéomètre. Le tableau 2 montre que les copolymères de l'invention présentent une stabilité de la viscosité contrairement aux exemples comparatifs.

[Tableau 2]

| Matériau magnétique | Viscosité initiale (Pa.s) | Viscosité après 30 min (Pa.s) |
|---|---|---|
| Copolymère I1/ NdFeB | 1300 | 3850 |
| Copolymère I2/ NdFeB | 1370 | 3920 |
| Copolymère C1/ NdFeB | 6398 | 13390 |
| Copolymère C2/ NdFeB | 5620 | 12350 |

(suite)

| Matériau magnétique | Viscosité initiale (Pa.s) | Viscosité après 30 min (Pa.s) |
|---|---|---|
| Copolymère C3/ NdFeB | 3970 | 21800 |
| Copolymère C4/ NdFeB | 2710 | 10000 |

**Revendications**

**1.** Matériau composite magnétique **caractérisé en ce qu'**il comprend :

4 à 30% en poids d'un copolymère,
70 à 96% en poids de poudre magnétique,
0 à 5% en poids d'au moins un agent de couplage,
0 à 5% en poids d'au moins un additif,
la somme du copolymère, de la poudre magnétique, de l'agent de couplage et de l'additif étant égale à 100% en poids.
ledit copolymère étant constitué de :

- au moins un motif (A) choisi parmi un motif polyamide présentant un nombre moyen d'atomes de carbone par rapport à l'atome d'azote supérieur à ou égal à 6,
- au moins une unité acide monocarboxylique (B),
- au moins une unité diamine (C),
- au moins une unité triamine (D),
- optionnellement au moins un motif (E) polyétheramide,

la somme des constituants A, B, C, D et E étant égale à 100% en poids par rapport au poids total du copolymère.

**2.** Matériau composite magnétique selon la revendication 1, **caractérisé en ce que** le copolyamide présente un taux de fins de chaîne acide inférieur à 10 μeq/g, dosées comme décrit dans la description.

**3.** Matériau composite magnétique selon la revendication 1 ou 2, **caractérisé en ce que** le copolyamide présente un taux de fins de chaîne amine inférieur à 80 μeq/g, dosées comme décrit dans la description.

**4.** Matériau composite magnétique selon l'une des revendications 1 à 3, **caractérisé en ce que** le motif polyamide est issu de la polycondensation d'au moins un lactame, ou d'au moins un acide aminocarboxylique, ou d'au moins une diamine avec au moins un acide dicarboxylique.

**5.** Matériau composite magnétique selon la revendication 4, **caractérisé en ce que** le motif polyamide est issu de la polycondensation d'au moins un lactame, ou d'au moins un acide aminocarboxylique, ou d'au moins une diamine aliphatique avec au moins un acide dicarboxylique aliphatique.

**6.** Matériau composite magnétique selon l'une des revendications 1 à 5, **caractérisé en ce que** le polyamide est un polyamide aliphatique semi-cristallin, en particulier choisi parmi PA410, PA510, PA512, PA514, PA610, PA612, PA1010, PA1012, PA1212, PA1014, PA6, PA66, PA11 et le PA12, en particulier les PA1010, PA1012, PA1212, PA11, PA12.

**7.** Matériau composite magnétique selon la revendication 6, **caractérisé en ce que** le polyamide aliphatique semi-cristallin est choisi parmi le PA6, le PA66, le PA11 et le PA12 ou un mélange de ceux-ci ou un copolyamide de ceux-ci.

**8.** Matériau composite magnétique selon l'une des revendications 6 ou 7, **caractérisé en ce que** le polyamide est choisi parmi le PA11 et le PA12, notamment le PA11.

**9.** Matériau composite magnétique selon l'une des revendications 1 à 5, **caractérisé en ce que** le polyamide est un polyamide amorphe, en particulier choisi parmi 11/B10, 12/B10, 11/P10, 12/P10, 11/BI/BT, 12/BI/BT, 11/PI/BT, 12/PI/BT, 11/PI/PT, 12/PI/PT, 11/BI, 12/BI, 11/PI et 12/PI, notamment 11/B10.

10. Matériau composite magnétique selon l’une des revendications 1 à 9, **caractérisé en ce que** le motif polyétheramide est issu de la polycondensation d’au moins une polyétherdiamine avec au moins un acide dicarboxylique aliphatique.

11. Matériau composite magnétique selon l’une des revendications 1 à 10, **caractérisé en ce que** ledit monoacide est choisi parmi les acides monocarboxyliques aliphatiques tels que l’acide tridécylique, l’acide myristique, l’acide palmitique, l’acide stéarique, l’acide pivalique, l’acide isobutyrique.

12. Matériau composite magnétique selon l’une des revendications 1 à 10, **caractérisé en ce que** ledit monoacide est choisi parmi les acides gras monoinsaturés.

13. Matériau composite magnétique selon la revendication 12, **caractérisé en ce que** l’acide gras monoinsaturé est l’acide undécylénique.

14. Matériau composite magnétique selon l’une des revendications 1 à 13, **caractérisé en ce que** ladite diamine est une diamine aliphatique, en particulier l’héxaméthylène diamine.

15. Matériau composite magnétique selon l’une des revendications 1 à 14, **caractérisé en ce que** ladite triamine est choisi parmi la diéthylène triamine (DETA), la Bis(Hexamethylene)triamine ou une polyéthertriamine.

16. Matériau composite magnétique selon la revendication 1 à 15, **caractérisé en ce que** la poudre magnétique est choisie parmi les alliages fer-nickel-aluminium, les ferrites, les alliages Samarium-cobalt, les alliages néodyme-Fer-Bore, les manganèse-aluminium-carbone et les alliages samarium-fer-azote.

17. Procédé de préparation d’un matériau composite magnétique tel que défini dans l’une des revendications 1 à 16, **caractérisé en ce qu’**il comprend une étape de mélange d’un copolymère tel que défini dans l’une des revendications 1 à 16 sous forme de granulés, avec une poudre magnétique, en particulier telle que définie dans la revendication 16, et optionnellement au moins un agent de couplage et au moins un additif.

18. Procédé de préparation d’un matériau composite magnétique selon la revendication 17, **caractérisé en ce qu’**il comprend une étape d’extrusion et de granulation du mélange de poudre magnétique avec ledit copolymère sous forme de granulés et optionnellement l’agent de couplage et/ou l’additif.

**Patentansprüche**

1. Magnetischer Verbundwerkstoff, **dadurch gekennzeichnet, dass** er umfasst:

   4 bis 30 Gew.-% eines Copolymers,
   70 bis 96 Gew.-% Magnetpulver,
   0 bis 5 Gew.-% mindestens eines Kupplungsmittels,
   0 bis 5 Gew.-% mindestens eines Zusatzstoffs,
   wobei die Summe aus dem Copolymer, dem Magnetpulver, dem Kupplungsmittel und dem Zusatzstoff gleich 100 Gew.-% ist,
   wobei das Copolymer besteht aus:

   - mindestens einer Einheit (A), die unter einer Polyamideinheit gewählt ist, die eine mittlere Anzahl von Kohlenstoffatomen bezogen auf das Stickstoffatom größer als oder gleich 6 aufweist,
   - mindestens einer Monocarbonsäureeinheit (B),
   - mindestens einer Diamineinheit (C),
   - mindestens einer Triamineinheit (D),
   - optional mindestens einer Polyetheramideinheit (E), wobei die Summe der Bestandteile A, B, C, D und E gleich 100 Gew.-% bezogen auf das Gesamtgewicht des Copolymers ist.

2. Magnetischer Verbundwerkstoff nach Anspruch 1, **dadurch gekennzeichnet, dass** das Copolyamid einen Gehalt an Säurekettenenden von weniger als 10 peq/g, dosiert wie in der Beschreibung beschrieben, aufweist.

3. Magnetischer Verbundwerkstoff nach Anspruch 1 oder 2, **dadurch gekennzeichnet, dass** das Copolyamid einen Gehalt an Aminkettenenden von weniger als 80 peq/g, dosiert wie in der Beschreibung beschrieben, aufweist.

4. Magnetischer Verbundwerkstoff nach einem der Ansprüche 1 bis 3, **dadurch gekennzeichnet, dass** die Polyamideinheit aus der Polykondensation mindestens eines Lactams oder mindestens einer Aminocarbonsäure oder mindestens eines Diamins mit mindestens einer Dicarbonsäure hervorgegangen ist.

5. Magnetischer Verbundwerkstoff nach Anspruch 4, **dadurch gekennzeichnet, dass** die Polyamideinheit aus der Polykondensation mindestens eines Lactams oder mindestens einer Aminocarbonsäure oder mindestens eines aliphatischen Diamins mit mindestens einer aliphatischen Dicarbonsäure hervorgegangen ist.

6. Magnetischer Verbundwerkstoff nach einem der Ansprüche 1 bis 5, **dadurch gekennzeichnet, dass** das Polyamid ein halbkristallines aliphatisches Polyamid ist, das insbesondere unter PA410, PA510, PA512, PA514, PA610, PA612, PA1010, PA1012, PA1212, PA1014, PA6, PA66, PA11 und PA12, insbesondere den PA1010, PA1012, PA1212, PA11, PA12, gewählt ist.

7. Magnetischer Verbundwerkstoff nach Anspruch 6, **dadurch gekennzeichnet, dass** das halbkristalline aliphatische Polyamid unter PA6, PA66, PA11 und PA12 oder einer Mischung von diesen oder einem Copolyamid von diesen gewählt ist.

8. Magnetischer Verbundwerkstoff nach einem der Ansprüche 6 oder 7, **dadurch gekennzeichnet, dass** das Polyamid unter PA11 und PA12, insbesondere PA11, gewählt ist.

9. Magnetischer Verbundwerkstoff nach einem der Ansprüche 1 bis 5, **dadurch gekennzeichnet, dass** das Polyamid ein amorphes Polyamid ist, das insbesondere unter 11/B10, 12/B10, 11/P10, 12/P10, 11/BI/BT, 12/BI/BT, 11/PI/BT, 12/PI/BT, 11/PI/PT, 12/PI/PT, 11/BI, 12/BI, 11/PI und 12/PI, insbesondere 11/B10, gewählt ist.

10. Magnetischer Verbundwerkstoff nach einem der Ansprüche 1 bis 9, **dadurch gekennzeichnet, dass** die Polyetheramideinheit aus der Polykondensation mindestens eines Polyetherdiamins mit mindestens einer aliphatischen Dicarbonsäure hervorgegangen ist.

11. Magnetischer Verbundwerkstoff nach einem der Ansprüche 1 bis 10, **dadurch gekennzeichnet, dass** die einwertige Säure unter den aliphatischen Monocarbonsäuren wie der Tridecansäure, der Myristinsäure, der Palmitinsäure, der Stearinsäure, der Pivalinsäure, der Isobuttersäure gewählt ist.

12. Magnetischer Verbundwerkstoff nach einem der Ansprüche 1 bis 10, **dadurch gekennzeichnet, dass** die einwertige Säure unter den einfach ungesättigten Fettsäuren gewählt ist.

13. Magnetischer Verbundwerkstoff nach Anspruch 12, **dadurch gekennzeichnet, dass** die einfach ungesättigte Fettsäure die Undecylensäure ist.

14. Magnetischer Verbundwerkstoff nach einem der Ansprüche 1 bis 13, **dadurch gekennzeichnet, dass** das Diamin ein aliphatisches Diamin ist, insbesondere das Hexamethylendiamin.

15. Magnetischer Verbundwerkstoff nach einem der Ansprüche 1 bis 14, **dadurch gekennzeichnet, dass** das Triamin unter Diethylentriamin (DETA), Bis-hexamethylentriamin oder einem Polyethertriamin gewählt ist.

16. Magnetischer Verbundwerkstoff nach Anspruch 1 bis 15, **dadurch gekennzeichnet, dass** das Magnetpulver unter den Eisen-Nickel-Aluminium-Legierungen, den Ferriten, den Samarin-Cobalt-Legierungen, den Neodym-Eisen-Bor-Legierungen, den Mangan-Aluminium-KohlenstoffLegierungen und den Samarium-Eisen-Stickstoff-Legierungen gewählt ist.

17. Verfahren zur Herstellung eines magnetischen Verbundwerkstoffs wie in einem der Ansprüche 1 bis 16 definiert, **dadurch gekennzeichnet, dass** es einen Schritt des Mischens eines Copolymers wie in einem der Ansprüche 1 bis 16 definiert in Form von Granulat mit einem magnetischen Pulver, insbesondere wie in Anspruch 16 definiert, und optional mindestens einem Kupplungsmittel und mindestens einem Zusatzstoff umfasst.

18. Verfahren zur Herstellung eines magnetischen Verbundwerkstoffs nach Anspruch 17, **dadurch gekennzeichnet, dass** es einen Schritt des Extrudierens und Granulierens der Mischung von magnetischem Pulver mit dem Copolymer in Form von Granulat und optional dem Kupplungsmittel und/oder dem Zusatzstoff umfasst.

## Claims

1. Magnetic composite material, **characterized in that** it comprises:

   4% to 30% by weight of a copolymer,
   70% to 96% by weight of magnetic powder,
   0% to 5% by weight of at least one coupling agent,
   0% to 5% by weight of at least one additive,
   where the sum of the copolymer, the magnetic powder, the coupling agent and the additive is 100% by weight, said copolymer consisting of:

   - at least one unit (A) chosen from a polyamide unit having an average number of carbon atoms relative to the nitrogen atom of greater than or equal to 6,
   - at least one monocarboxylic acid unit (B),
   - at least one diamine unit (C),
   - at least one triamine unit (D),
   - optionally at least one polyetheramide unit (E),

   where the sum of the constituents A, B, C, D and E is 100% by weight relative to the total weight of the copolymer.

2. Magnetic composite material according to Claim 1, **characterized in that** the copolyamide has an acid chain end content of less than 10 peq/g, assayed as described in the description.

3. Magnetic composite material according to Claim 1 or 2, **characterized in that** the copolyamide has an amine chain end content of less than 80 peq/g, assayed as described in the description.

4. Magnetic composite material according to one of Claims 1 to 3, **characterized in that** the polyamide unit is from the polycondensation of at least one lactam, or of at least one aminocarboxylic acid, or of at least one diamine with at least one dicarboxylic acid.

5. Magnetic composite material according to Claim 4, **characterized in that** the polyamide unit is from the polycondensation of at least one lactam, or of at least one aminocarboxylic acid, or of at least one aliphatic diamine with at least one aliphatic dicarboxylic acid.

6. Magnetic composite material according to one of Claims 1 to 5, **characterized in that** the polyamide is a semicrystalline aliphatic polyamide, in particular chosen from PA410, PA510, PA512, PA514, PA610, PA612, PA1010, PA1012, PA1212, PA1014, PA6, PA66, PA11 and PA12, in particular PA1010, PA1012, PA1212, PA11, PA12.

7. Magnetic composite material according to Claim 6, **characterized in that** the semicrystalline aliphatic polyamide is chosen from PA6, PA66, PA11 and PA12 or a mixture thereof or a copolyamide thereof.

8. Magnetic composite material according to either of Claims 6 and 7, **characterized in that** the polyamide is chosen from PA11 and PA12, notably PA11.

9. Magnetic composite material according to one of Claims 1 to 5, **characterized in that** the polyamide is an amorphous polyamide, in particular chosen from 11/B10, 12/B10, 11/P10, 12/P10, 11/BI/BT, 12/BI/BT, 11/PI/BT, 12/PI/BT, 11/PI/PT, 12/PI/PT, 11/BI, 12/BI, 11/PI and 12/PI, notably 11/B10.

10. Magnetic composite material according to one of Claims 1 to 9, **characterized in that** the polyetheramide unit is from the polycondensation of at least one polyetherdiamine with at least one aliphatic dicarboxylic acid.

11. Magnetic composite material according to one of Claims 1 to 10, **characterized in that** said monoacid is chosen from aliphatic monocarboxylic acids such as tridecylic acid, myristic acid, palmitic acid, stearic acid, pivalic acid and isobutyric acid.

12. Magnetic composite material according to one of Claims 1 to 10, **characterized in that** said monoacid is chosen from monounsaturated fatty acids.

**13.** Magnetic composite material according to Claim 12, **characterized in that** the monounsaturated fatty acid is undecylenic acid.

**14.** Magnetic composite material according to one of Claims 1 to 13, **characterized in that** said diamine is an aliphatic diamine, in particular hexamethylenediamine.

**15.** Magnetic composite material according to one of Claims 1 to 14, **characterized in that** said triamine is chosen from diethylenetriamine (DETA), bis(hexamethylene)triamine or a polyethertriamine.

**16.** Magnetic composite material according to one of Claims 1 to 15, **characterized in that** the magnetic powder is chosen from iron-nickel-aluminium alloys, ferrites, samarium-cobalt alloys, neodymium-iron-boron alloys, manganese-aluminium-carbon alloys and samarium-iron-nitrogen alloys.

**17.** Process for preparing a magnetic composite material as defined in one of Claims 1 to 16, **characterized in that** it comprises a step of mixing a copolymer as defined in one of Claims 1 to 16, in pellet form, with a magnetic powder, in particular as defined in Claim 16, and optionally at least one coupling agent and at least one additive.

**18.** Process for preparing a magnetic composite material according to Claim 17, **characterized in that** it comprises a step of extruding and pelletizing the mixture of magnetic powder with said copolymer in pellet form and optionally the coupling agent and/or the additive.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014050631 A
- JP 2006344768 B


### Littérature non-brevet citée dans la description


- Cycloaliphatic Amines. **KIRK-OTHMER.** Encyclopaedia of Chemical Technology. 1992, 386-405